(19) Europäisches Patentamt / European Patent Office / Office européen des brevets

(11) **EP 4 183 667 B1**

(12) **EUROPEAN PATENT SPECIFICATION**

(45) Date of publication and mention
of the grant of the patent:
**17.07.2024 Bulletin 2024/29**

(21) Application number: **21209083.1**

(22) Date of filing: **18.11.2021**

(51) International Patent Classification (IPC):
***B62D 53/08*** *(2006.01)*

(52) Cooperative Patent Classification (CPC):
**B62D 53/0807**

(54) **METHOD FOR CLOSED LOOP CONTROL OF A POSITION OF A FIFTH WHEEL OF A VEHICLE**

VERFAHREN ZUR REGELUNG DER POSITION EINER SATTELKUPPLUNG EINES FAHRZEUGS MIT GESCHLOSSENEM REGELKREIS

PROCÉDÉ DE COMMANDE EN BOUCLE FERMÉE D'UNE POSITION D'UNE CINQUIÈME ROUE DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.05.2023 Bulletin 2023/21**

(73) Proprietor: **VOLVO TRUCK CORPORATION**
**405 08 Göteborg (SE)**

(72) Inventor: **SUBRAMANIAN, Chidambaram**
**27407 NC, Greensboro (US)**

(74) Representative: **Germain Maureau**
**12, rue Boileau**
**69006 Lyon (FR)**

(56) References cited:
CN-B- 110 450 771   DE-A1- 102018 004 110
US-A1- 2017 083 773   US-A1- 2018 111 621

**Description**

TECHNICAL FIELD OF THE INVENTION

The present disclosure relates to closed loop control of a position of a fifth wheel of a vehicle.

BACKGROUND

The commercial vehicle technology has grown drastically in the last five decades. Modern vehicles have superior control systems in the chassis in order to improve the performance and safety. Even though there are systems to control fifth wheel position, they are not intelligent enough to include advanced parameters. The fleet business and commercial vehicle transportation solutions have exponentially increased over the past few years. Therefore, performance criteria for fuel economy and traction are given more attention. The performance of the vehicle (Fuel economy, Stability and Tire wear) are highly dependent on aerodynamics and load on the drive wheels. For a specific application and a specific driving cycle (Acceleration, Maneuver style - rapid or smooth and Braking style) and specific environment condition (hill, road profile, wind speed and direction). The optimum fifth wheel position values to obtain necessary performance and meet legal regulations depend on the driving cycle (driver behavior) and vehicle application. There are solutions to control the fifth wheel sliding for aerodynamics. But there is no solution for controlling it to include traction as well. Similar model suggestions are disclosed in DE 10 2018 004110 A1.

Therefore, there is a need for a method for closed loop control of a position of a fifth wheel of a vehicle which includes traction.

SUMMARY OF THE INVENTION

To that end, the present invention provides a method for determining a position of a fifth wheel on a vehicle, the method comprising the following steps:

-  receiving, at a processor aboard the vehicle, input features associated with ongoing movement of the vehicle during a period of time;
-  executing, via the processor, a first reinforcement learning model, wherein inputs to the first reinforcement learning model comprise the input features and at least one feedback from the driver, the at least one feedback from the driver indicating if a previous output of the first reinforcement learning model was correct, the outputs of the first reinforcement learning model comprising a current driving cycle of the vehicle; and a current driving application of the vehicle,
-  executing, via the processor, a second reinforcement learning model, wherein inputs to the second reinforcement learning model comprise, the outputs of the first reinforcement learning model and the input features, output of the second reinforcement learning model comprising a desired fifth wheel position.

According to these provisions, an appropriate fifth wheel position is determined.

According to an embodiment, the invention comprises one or more of the following features, alone or in any combination technically compatible.

According to an embodiment, the input features are collected by vehicle sensors placed on the vehicle and comprise at least one of vehicle driver information, vehicle state information, and environment information.

According to an embodiment, the vehicle driver information comprise at least one of throttle information, brake pedal information, steering angle information.

According to an embodiment, the vehicle state information comprise at least one of vehicle velocity, wheel speeds, axle load, GPS position of the vehicle, suspension articulation data, fuel consumed by the vehicle, acceleration and moments on the center of gravity of the vehicle, and a tire wear of at least one wheel of the vehicle, a torque applied to at least one wheel of the vehicle.

According to an embodiment, the environment information comprise at least one of hill angle, bank angle, wind speed, wind direction.

According to an embodiment, the input features further comprise at least one of slip data for the wheels of the vehicle, braking capacity, a road angle of ascent/descent for the road on which the vehicle is travelling, general engine data, road conditions such as wet, dry, icy, snowy, an acceleration/deceleration pattern over the period of time.

According to an embodiment, the method further comprises a step of providing the desired fifth wheel position as a target input for a closed loop control system to actuate fifth wheel actuators to move the fifth wheel according to the desired fifth wheel position.

According to an embodiment, the step of executing a second reinforcement learning model comprises a step of defining a vehicle parameter to be optimized by the desired fifth wheel position determined by the method.

According to an embodiment, the vehicle parameter is at least one of aerodynamics, i.e. fuel efficiency, traction, ride comfort, tire wear of the tires of the wheels, of the vehicle.

According to these provisions, the aerodynamics, the ride comfort, the traction and the tire wear are optimized on the vehicle through appropriate determination of the fifth wheel position.

According to an embodiment, inputs to the second reinforcement learning model comprise an estimated feedback on the vehicle parameter, the estimated feedback on the vehicle parameter indicating if the vehicle parameter was improved by a previous output of the second reinforcement learning model, the estimated feedback on the vehicle parameter being estimated by a vehicle parameter feedback estimation module based on vehicle information collected by a subset of the vehicle sensors placed on the vehicle to collect the input features.

According to these provisions, the second reinforcement learning model adapts and self-modifies over time, producing more accurate optimization of the vehicle parameter.

According to an embodiment, the method further comprises displaying a notification to manually modify the fifth wheel position of the vehicle based on the fifth wheel position.

According to another aspect, the invention provides a computer program apparatus, comprising a set of instructions configured to implement the method according to anyone of the embodiments described herein above, when the set of instructions are executed on a processor.

According to another aspect, the invention provides a vehicle comprising a fifth wheel and a processor and associated memory comprising the above computer program, the processor being configured to execute the computer program.

BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:

> [Fig. 1] illustrates in fig. 1A a first example of a driving application in a hilly region, and in fig. 1B a second example of long haul driving application in flat terrain.
> [Fig. 2] illustrates in fig. 2A a first example of a smooth driving cycle and in fig. 2B a second example of a rough driving cycle.
> [Fig. 3] illustrates an example of reinforcement learning being used to determine an optimal fifth wheel position.
> [Fig. 4] represents schematically the sequence of the steps of the method according to an embodiment of the invention.

DETAILED DESCRIPTION OF THE INVENTION ACCORDING TO AN EMBODIMENT

Various embodiments of the disclosure are described in detail below. While specific implementations are described, it should be understood that this is done for illustration purposes only.

A fifth wheel is a hitch that allows to connect a cargo attachment to the back of a tracting vehicle, like a tractor or truck. For example, the fifth wheel refers to the "U" shaped coupling component found on the back of the towing vehicle, be it a large transport, pickup truck, or semi-truck.

Various examples and embodiments for defining an optimum position of a fifth wheel of a vehicle, based on a vehicle's drive cycle and the driver's driving style, are considered herein. Consider the following example: as a truck driver delivering ore from a mine drives from the mine to a foundry, the truck changes surfaces (dirt to asphalt to cement) and driving conditions (slow crawl with multiple turns at the mine, fast and straight on a highway, stop and go traffic before reaching the foundry). For optimal comfort, fuel efficiency, aerodynamics, tire wear, performance, or other desired vehicle applications, each of the conditions through which the truck will pass could have distinct optimal fifth wheel position FWP. In addition, how the driver operates the vehicle, and the driver's driving style or tendencies, could affect the optimal fifth wheel position FWP.

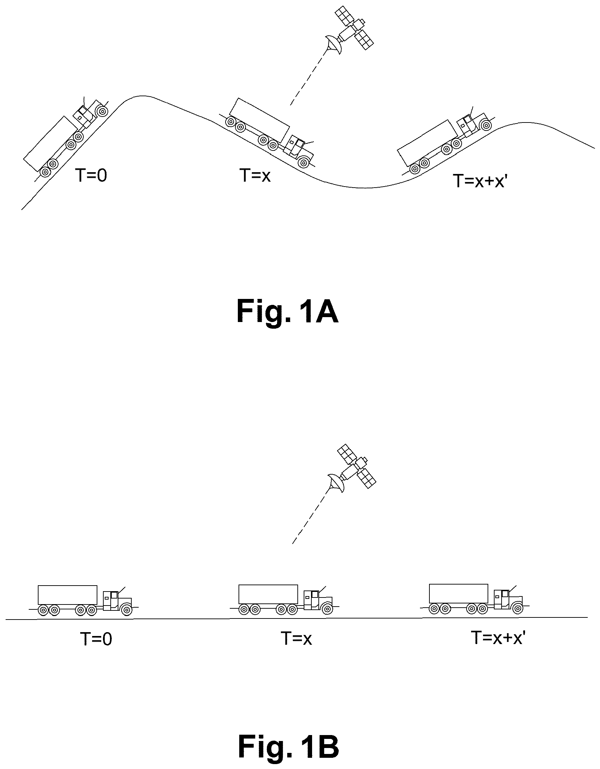

Figure 1 illustrates a first and a second example of driving application, with a vehicle driving in hilly region on the one hand and a vehicle driving on a flat road on the other hand. Fig. 1A illustrates a first example of a driving application in a hilly region, and fig. 1B illustrates a second example of long haul driving application in flat terrain. In fig. 1A and in fig. 1B, the vehicle is represented at different times T=0, T=x, and T=x+x'. At least one GPS satellite is providing location coordinates to the vehicle.

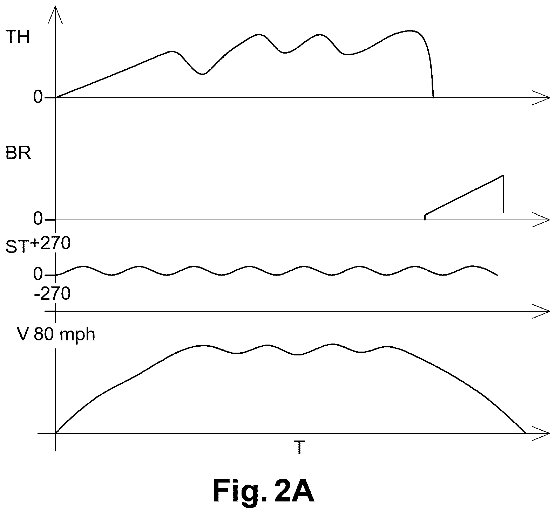

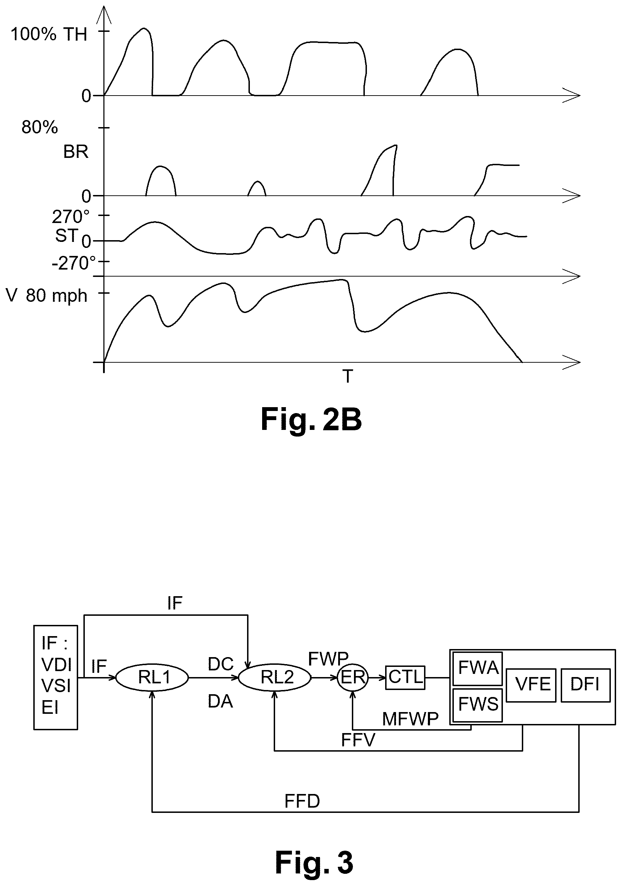

Figure 2 illustrates a first and a second example of driving cycle. Considering a scenario of travelling from position A to position B within time T. The driver signals profile such as throttle pedal signal TH, brake pedal signal BR, steering wheel signal ST, velocity signal V, are represented for each driving cycle as a function of time T; typical driving cycles are defined by such signal profiles which differentiates between a "smooth" and a "rough" driver. Fig. 2A illustrates a first example of a smooth driving cycle DC and fig. 2B illustrates a second example of a rough driving cycle DC.

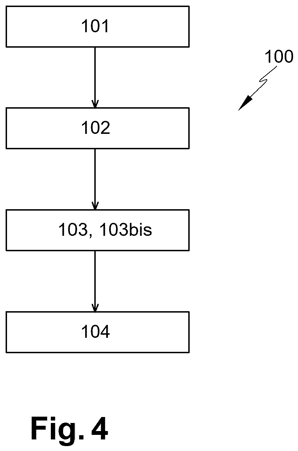

As illustrated in figure 3, and in reference to figure 4, to determine an optimum position of a fifth wheel FWP for any given scenario, a machine learning model, based on artificial neural network technology, is created using known vehicle drive cycles, driving applications, and environmental conditions. This machine learning model is then converted to computer executable code, then deployed on a vehicle. When in operation, the machine learning model executes 102 a first reinforcement learning model RL1 where input features collected by vehicle sensors aboard the vehicle and received 101 by the computer aboard the vehicle, allow the first reinforcement learning model RL1 to determine a current driving cycle DC of the vehicle, such as smooth or rough, and a current driving application DA, such as hilly or flat, for which the vehicle is being used.

The input features typically comprise vehicle driver information VDI, indicative of driver actions on the vehicle, vehicle state information VSI, indicative of vehicle dynamics, and environment information EI.

The vehicle driver information VDI comprise typically throttle pedal TH information, brake pedal BR information, steering wheel angle ST information.

The vehicle state information VSI comprise typically vehicle velocity V, wheel speeds, axle load, GPS position of the vehicle, suspension articulation data, fuel consumed by the vehicle, acceleration and moments on the center of gravity of the vehicle, and a tire wear of at least one wheel of the vehicle, a torque applied to at least one wheel of the vehicle.

The environment information EI comprise typically hill angle, bank angle, wind speed, wind direction, and GPS position of the vehicle.

Other exemplary data which can be collected could include slip data for the various wheels, braking capacity, angle of ascent/descent, general engine data, road conditions (wet, dry, icy, etc.), acceleration/deceleration patterns over a period of time, and/or any other data conveyed via the Controller Area Network (CAN) bus within the vehicle.

The outputs of the first reinforcement learning is provided to a second reinforcement learning model RL2, based on a second neural network, to determine the optimum position of a fifth wheel FWP, based on how the vehicle is currently being operated, i.e. based on the current driving cycle DC of the vehicle and the driving application DA for which the vehicle is currently being used, as determined by the first reinforcement learning model RL1. The second reinforcement learning model RL2 is also provided the input features IF collected by the vehicle sensors, so that the optimum position of a fifth wheel FWP is determined based on the input features IF collected by the vehicle sensors, and based on the current driving cycle DC of the vehicle and the driving application DA for which the vehicle is currently being used. Thereby, executing 103, via the processor aboard the vehicle, the second reinforcement learning model RL2, with inputs comprising the outputs of the first reinforcement learning model RL1 and the input features IF, outputs a desired fifth wheel position FWP.

In configurations where the vehicle is configured with actuators to self-modify the position of the fifth wheel during operation, the desired position of the fifth wheel is provided 104 as a target input for a closed loop control system CTL to actuate fifth wheel actuators FWA to move the fifth wheel according to the desired fifth wheel position FWP.

Any combination of the collected vehicle data can be input into a reinforcement learning model RL1, RL2 executed by a processor of the vehicle. The reinforcement learning model can also be a neural network, configured in a similar way as other neural networks.

One example output of the first reinforcement learning model RL1 can be a driving cycle of the vehicle, such as "transient" (where the vehicle is undergoing many changes, typical in stop and go traffic or off-roading), or "modal" (where the vehicle is going long periods of time at a constant speed). Another example output of the first reinforcement learning model RL1 can be an application of the vehicle, such as if the vehicle is being used to transport goods, ferry passengers, drive in an urban environment, drive off-road, etc.

Another input of the first reinforcement learning model RL1 is a feedback from the driver FFD of the vehicle. For example, as the vehicle sensors collect data and the reinforcement learning models RL1, RL2 analyze that data, the driver of the vehicle can confirm (or reject) the driving cycle DC and/or driving application DA of the vehicle. Over time, as the system collects additional data from the driver, the system can modify the first reinforcement learning model RL1 such that the driving cycle/vehicle application outputs are based on the feedback FFD provided by the vehicle driver. In this manner, the first reinforcement learning model RL1 adapts and self-modifies over time, producing more accurate predictions of the driving cycle and/or vehicle application. The system can also use GPS data, known road surface data, etc., to cross-check the feedback FFD received by the vehicle driver.

The outputs of the first reinforcement learning model RL1 are used as inputs to the second reinforcement learning model RL2, which is typically also based on a neural network. Additional inputs to the second reinforcement learning model RL2 also include the input features collected by vehicle sensors, which were used as inputs to the first reinforcement learning model RL1. In some configurations, the vehicle sensor data input to the second reinforcement learning model RL2 can be identical to the inputs of the first reinforcement learning model RL1, whereas in other configurations the vehicle sensor data input to the second reinforcement learning model RL2 can be a portion or subset of the vehicle sensor data input to the first reinforcement learning model RL1. In still other configurations, the vehicle sensor data input to the second reinforcement learning model RL2 can include vehicle data which was not used as an input to the first reinforcement learning model RL1. For instance, in some configurations, an additional input to the second reinforcement learning model RL2 can include a driver (or other human being) preference on how the vehicle should be optimized, i.e. on which vehicle parameter VP should be optimized, among for example aerodynamics, i.e. fuel efficiency, or traction, ride comfort, or tire wear of the tires of the wheels of the vehicle. In such cases, the driver can define 103bis that they desire that the fifth wheel of the vehicle be positioned to optimize the fuel economy of the vehicle. Other examples of driver preferences could be to minimize the wear on the tires of the wheels of the vehicle (thereby optimizing tire wear), optimizing ride comfort, or optimizing vehicle performance for a given scenario (such as optimizing for cornering versus optimizing for lack of cornering). While in this example the system can be configured to take a single driver preference, in other configurations the inputs to the second reinforcement learning model RL2 can also include multiple driver preferences, or ranked driver preferences; in particular, if the driver chooses « auto », the system would optimize the mentioned factors in a weighted way, such as 30% tires, 30% fuel economy etc. in a predefined scale. If the fuel level is low, the second reinforcement learning model RL2 would optimize mainly fuel economy. If the tire wear is more, it would increase the percentage for optimizing tire wear. If the DA is mining and load is more, it would optimize traction.

The second reinforcement learning model RL2 can then output optimal fifth wheel position values based on the inputs provided to the second reinforcement learning model RL2. In some circumstances, the second reinforcement learning model RL2 outputs values for all possible fifth wheel position values on a given vehicle each time the algorithm is executed, whereas in other circumstances the algorithm only outputs fifth wheel position values which vary from a current vehicle configuration.

Where the vehicle is equipped with actuators to adjust fifth wheel components, the fifth wheel position output of the second reinforcement learning model RL2 can be transmitted to one or more fifth wheel actuators FWA corresponding to the respective output, such that the fifth wheel actuators FWA adjust the vehicle fifth wheel position while the vehicle is in operation. If the actuator is broken or if the actuator is not able to drive the fifth wheel to the desired position a warning to the driver may be provided.

In configurations where the vehicle is configured to auto-adjust while operating, the outputs of the second reinforcement learning model RL2 can be provided 104 to fifth wheel actuators FWA via control systems CTL within the vehicle. The actuators can then adjust the vehicle components according to the adjustment values output by the second reinforcement learning model RL2, and fifth wheel sensors FWS can compare the adjusted component values to the optimal/desired component values output by the second reinforcement learning model RL2. If adjusted component values detected do not match the desired values output by the second reinforcement learning model RL2, i.e. if an error ER is detected by the closed control loop, additional adjustments may be requested to the fifth wheel actuators FWA via the control system CTL within the vehicle.

Another input of the second reinforcement learning model RL2 is a feedback from the vehicle. For example, as the vehicle sensors collect data and the reinforcement learning models RL1, RL2 analyzes that data, some of or all of the vehicle data collected by the sensors are processed by a vehicle parameter feedback estimation VFE module to provide some estimated feedback FFV on at least one of the vehicle parameter VP being optimized by the second reinforcement learning model RL2. Over time, as the system provides additional feedback data FFV on the vehicle parameter VP being optimized, the system can modify the second reinforcement learning model RL2 such that the optimized vehicle parameter VP is based on the feedback FFV provided by the vehicle parameter feedback estimation VFE module. In this manner, the second reinforcement learning model RL2 adapts and self-modifies overtime, producing more accurate optimization of the vehicle parameter VP.

For example, if traction is to be optimized, the system would use the following logic to check if traction has improved or not. Traction is determined as the force utilized to propel the vehicle. Consider the following newtons equation of motion

$$f = ma$$

Where *f* is the total force under the tires to propel the vehicle and *a* is the resulting acceleration in the center of gravity while m is the mass. The acceleration would be sensed using an inertial measurement unit in the vehicle and f would be estimated. The total force f can be increased if there is more load under the propelled tires. The fifth wheel location would be moved to provide optimum load on the rear wheel tires to generate increased total force f. For the same engine speed, same engine power, same tire and road conditions, increased total force f is generated due to more load without slipping the tires. This is optimized in low friction conditions like ice, wet etc. While, slow and go is a big driving application and especially for drivers with harsh acceleration and braking driving style.

Similarly, for fuel economy we will monitor the fuel consumed in periodic intervals for specific engine torque, throttle, road inclination etc.

Similarly, for tire wear we would rely on the tire wear information from existing tire sensors or slip information from the vehicle CAN bus using the wheel speed, vehicle speed and brake pedal or throttle pedal.

Similarly, for ride comfort we would monitor the accelerations on the cabin and seat preferably.

Hence, depending on the vehicle parameter VP which is optimized, a different subset of the vehicle sensors placed on the vehicle to collect the input features IF.

As an example of how to train the neural network which in turn is converted to executable code as a reinforcement learning model RL1, RL2, a vehicle manufacturer or other entity can collect known data, corresponding to the vehicle information and sensor data used as inputs to the reinforcement learning model RL1, RL2, such as: vehicle velocity, wheel speeds, steering angle, throttle, brake pedal depression, axle load data, GPS location, and/or suspension articulation data, hill angle, bank angle, wind speed, wind direction, etc. This feature data can be collected from multiple vehicles under multiple conditions, preferably with the amount of data collected from each vehicle being at least thirty minutes of operation, though the amount of data can vary.

In the case of the training of the first reinforcement learning model RL1, (1) the known input features data, (2) the corresponding, known driving cycles DC, (3) the corresponding, known driving applications DA, and (4) known fifth wheel positioning component values, can be compared via a sensitivity analysis, resulting in correlations between (1) the known feature data, (2) the corresponding, known driving cycles DC, (3) the corresponding, known driving applications DA. For example, the sensitivity analysis can execute models (such as a one-at a time test, a derivative-based local method, regression analysis, variance-based method, screening, scatter plots, etc.) to define how a given input/variable affects the likelihood of a specific condition (such as the X, Y, Z dimensions) in the fifth wheel position being determined. More specifically, the system can receive the known vehicle sensor data collected, driving cycles, vehicle applications, and determine how they affect the known fifth wheel position. The correlation outputs of the sensitivity analysis define the likelihood of a given variable affecting one or more of the outputs of the first reinforcement learning model RL1.

In the case of the training of the second reinforcement learning model RL2, (1) the known input features data, (2) the corresponding, known driving cycles DC, (3) the corresponding, known driving applications DA, and (4) known fifth wheel positioning component values, can be compared via a sensitivity analysis, resulting in correlations between (1) the known feature data, (2) the corresponding, known driving cycles DC, (3) the corresponding, known driving applications DA and (4) known fifth wheel positioning component values. For example, the sensitivity analysis can execute models (such as a one-at a time test, a derivative-based local method, regression analysis, variance-based method, screening, scatter plots, etc.) to define how a given input/variable affects the likelihood of a specific condition (such as the X, Y, Z dimensions) in the fifth wheel position being determined. More specifically, the system can receive the known vehicle sensor data collected, driving cycles, vehicle applications, and determine how they affect the known fifth wheel position. The correlation outputs of the sensitivity analysis define the likelihood of a given variable affecting one or more of the outputs of the second reinforcement learning model RL2, i.e. known fifth wheel positioning component values.

The outputs of the sensitivity analysis, as well the sensitivity analysis training data, can then be used to construct a machine learning network. For example, the correlations and test data associated with the sensitivity analysis can be input into Python, MatLab®, or other development software configured to construct neural network based on factor-specific data. Depending on the specific scenario, users can adjust the neural network construction by selecting from optimization methods including (but not limited to) the least-squares method, the Levenberg-Marquardt algorithm, the gradient descent method, or the Gauss-Newton method. The neural network can make predictions of the optimal fifth wheel position given input variables corresponding to the same data which were used to train the neural network. The neural network can then be converted to machine code and uploaded into memory, where upon execution by a processor the neural network operates as a machine learning model.

The training data can be driving data from various driving conditions, such as mining, long-haul, street, refuse, etc. The data from these driving conditions are evaluated via sensitivity analysis, and the resulting correlations can be used to construct the neural network for the first and second reinforcement learning model RL1, RL2. After initial constructions, the reinforcement learning model RL1, RL2 can operate based on a reward system. For example, considering the first reinforcement learning model RL1, after a day of driving, feedback from the driver can be collected. The system would ask the driver, via a driver feedback interface DFI module, a question regarding the driving conditions of the day, then use the answers the driver provides to determine if the model is accurately predicting driving conditions. For example, the system may ask the driver if they drove on rough surfaces with hard turns and an average velocity of 10 kilometers/hour, which is what the system predicted occurred. If the driver answers yes, the system gets a "reward," meaning that the system further maintain the tune of the model in a similar manner going forward. If the driver answers no, the system will tune the model in a different direction until the driver begins answering "True" or "Yes" to the questions presented. More specifically, the Yes/No or True/False answers to the questions can modify the weights and biases of the connections between the nodes in the first reinforcement learning model RL1 neural network, where a yes/true can add weight to an existing connection, and a no/false can reduce weight of an existing connection. Questions can be presented to the drivers on a periodic basis (everyday, every week, etc.), when a change in conditions is detected (e.g., a change from dirt to asphalt), and/or when a certain amount of time driving has occurred (e.g. every four hours of driving).

Considering the second reinforcement learning model RL2, if the chosen option is to optimize fuel economy for a long-haul tractor-trailer in a flat terrain, and provided that the driving application and driving style is identified correctly by RL1, to be smooth accelerations and smooth braking which means the velocity change on the vehicle is not drastic and is a smooth profile, the fifth wheel position by RL2 would be set based on all the inputs, for example at 50cm. The second reinforcement learning model RL2 would optimize the weights and bias based on the feedback. The feedback for fuel economy is checked in the vehicle. If the fuel economy has increased, for example in terms of miles per gallon, there would be a positive reward provided to RL2 and the weights and bias would modify towards that direction to get more accuracy, wherein weights and bias in the neural network of the second reinforcement learning model RL2 layer determine the output based on the inputs. If the fuel economy had decreased, then there would be a negative reward/punishment sent as a feedback to the second reinforcement learning model RL2 which would optimize the bias and weights in the opposite direction.

According to an aspect, the invention relates to a computer program apparatus, comprising a set of instructions configured to implement the method of anyone of the embodiments described herein above, when the set of instructions are executed on a processor.

According to a further aspect, the invention relates to a vehicle comprising a fifth wheel and a processor and associated memory comprising the above computer program, the processor being configured to execute the computer program.

**Claims**

1. A method (100) for determining a position of a fifth wheel on a vehicle, the method comprising the following steps:

   - receiving (101), at a processor aboard the vehicle, input features associated with ongoing movement of the vehicle during a period of time;
   - executing (102), via the processor, a first reinforcement learning model (RL1), wherein inputs to the first reinforcement learning model (RL1) comprise the input features (IF) and at least one feedback from the driver (FFD), the at least one feedback from the driver (FFD) indicating if a previous output of the first reinforcement learning model (RL1) was correct, the outputs of the first reinforcement learning model (RL1) comprising a current driving cycle (DC) of the vehicle; and a current driving application (DA) of the vehicle,
   - executing (103), via the processor, a second reinforcement learning model (RL2), wherein inputs to the second reinforcement learning model (RL2) comprise, the outputs of the first reinforcement learning model (RL1) and the input features (IF), output of the second reinforcement learning model (RL2) comprising a desired fifth wheel position (FWP).

2. The method (100) of claim 1, wherein the input features (IF) are collected by vehicle sensors placed on the vehicle and comprise at least one of vehicle driver information (VDI), vehicle state information (VSI), and environment information (EI).

3. The method (100) of claim 2, wherein the vehicle driver information (VDI) comprise at least one of throttle information, brake pedal information, steering angle information.

4. The method (100) of claim 2, wherein the vehicle state information (VSI) comprise at least one of vehicle velocity, wheel speeds, axle load, GPS position of the vehicle, suspension articulation data, fuel consumed by the vehicle, acceleration and moments on the center of gravity of the vehicle, and a tire wear of at least one wheel of the vehicle, a torque applied to at least one wheel of the vehicle.

5. The method (100) of claim 2, wherein the environment information (EI) comprise at least one of hill angle, bank angle, wind speed, wind direction.

6. The method (100) of anyone of claims 2 to 5, wherein the input features further comprise at least one of slip data for the wheels of the vehicle, braking capacity, a road angle of ascent/descent for the road on which the vehicle is travelling, general engine data, road conditions such as wet, dry, icy, snowy, an acceleration/deceleration pattern over the period of time.

7. The method (100) of anyone of claims 1 to 6, further comprising a step of providing (104) the desired fifth wheel position (FWP) as a target input for a closed loop control system (CTL) to actuate fifth wheel actuators (FWA) to move the fifth wheel according to the desired fifth wheel position (FWP).

8. The method (100) of anyone of claims 1 to 7, wherein the step of executing (103) a second reinforcement learning model (RL2) comprises a step of defining (103bis) a vehicle parameter (VP) to be optimized by the desired fifth wheel position (FWP) determined by the method (100).

9. The method (100) of claim 8, wherein the vehicle parameter (VP) is at least one of aerodynamics, i.e. fuel efficiency, traction, ride comfort, tire wear of the tires of the wheels, of the vehicle.

10. The method (100) of anyone of claims 8 to 9, wherein inputs to the second reinforcement learning model (RL2) comprise an estimated feedback (FFV) on the vehicle parameter (VP), the estimated feedback (FFV) on the vehicle parameter (VP) indicating if the vehicle parameter (VP) was improved by a previous output of the second reinforcement learning model (RL2), the estimated feedback (FFV) on the vehicle parameter (VP) being estimated by a vehicle parameter feedback estimation (VFE) module based on vehicle information collected by a subset of the vehicle sensors placed on the vehicle to collect the input features (IF).

11. The method of claim 1, further comprising displaying a notification to manually modify the fifth wheel position of the vehicle based on the fifth wheel position (FWP).

**12.** Computer program apparatus, comprising a set of instructions configured to implement the method of anyone of claims 1 to 11, when the set of instructions are executed on a processor.

**13.** Vehicle comprising a fifth wheel and a processor and associated memory comprising a computer program of claim 12, the processor being configured to execute the computer program.


**Patentansprüche**

**1.** Verfahren (100) zum Bestimmen einer Position einer Sattelkupplung an einem Fahrzeug, wobei das Verfahren die folgenden Schritte umfasst:

- Empfangen (101), an einem Prozessor an Bord des Fahrzeugs, von Eingabemerkmalen, die der laufenden Bewegung des Fahrzeugs während eines Zeitraums zugeordnet sind;
- Ausführen (102) eines ersten Reinforcement-Learning-Modells (RL1) über den Prozessor, wobei Eingaben in das erste Reinforcement-Learning-Modell (RL1) die Eingabemerkmale (IF) und mindestens eine Rückmeldung vom Fahrer (FFD) umfassen, wobei die mindestens eine Rückmeldung vom Fahrer (FFD) angibt, ob eine vorherige Ausgabe des ersten Reinforcement-Learning-Modells (RL1) korrekt war, wobei die Ausgaben des ersten Reinforcement-Learning-Modells (RL1) einen aktuellen Fahrzyklus (DC) des Fahrzeugs und eine aktuelle Fahranwendung (DA) des Fahrzeugs umfassen,
- Ausführen (103) eines zweiten Reinforcement-Learning-Modells (RL2) über den Prozessor, wobei Eingaben in das zweite Reinforcement-Learning-Modell (RL2) die Ausgaben des ersten Reinforcement-Learning-Modells (RL1) und die Eingabemerkmale (IF) umfassen, wobei die Ausgabe des zweiten Reinforcement-Learning-Modells (RL2) eine gewünschte Sattelkupplungsposition (FWP) umfasst.

**2.** Verfahren (100) nach Anspruch 1, wobei die Eingabemerkmale (IF) durch Fahrzeugsensoren, die am Fahrzeug angebracht sind, erfasst werden und Fahrzeugfahrerinformationen (VDI) und/oder Fahrzeugzustandsinformationen (VSI) und/oder Umgebungsinformationen (EI) umfassen.

**3.** Verfahren (100) nach Anspruch 2, wobei die Fahrzeugfahrerinformationen (VDI) Drosselklappeninformationen und/oder Bremspedalinformationen und/oder Lenkwinkelinformationen umfassen.

**4.** Verfahren (100) nach Anspruch 2, wobei die Fahrzeugzustandsinformationen (VSI) eine Fahrzeuggeschwindigkeit und/oder Raddrehzahlen und/oder eine Achslast und/oder eine GPS-Position des Fahrzeugs und/oder Aufhängungsdaten und/oder den Kraftstoffverbrauch des Fahrzeugs und/oder eine Beschleunigung und Momente auf den Schwerpunkt des Fahrzeugs und/oder einen Reifenverschleiß von mindestens einem Rad des Fahrzeugs und/oder ein auf mindestens ein Rad des Fahrzeugs ausgeübtes Drehmoment umfassen.

**5.** Verfahren (100) nach Anspruch 2, wobei die Umgebungsinformationen (EI) einen Hügelwinkel und/oder einen Querneigungswinkel und/oder eine Windgeschwindigkeit und/oder Windrichtung umfassen.

**6.** Verfahren (100) nach einem der Ansprüche 2 bis 5, wobei die Eingabemerkmale ferner Schlupfdaten für die Räder des Fahrzeugs und/oder eine Bremskapazität und/oder einen Steigungs-/Gefällewinkel für die Straße, auf der das Fahrzeug fährt, und/oder allgemeine Motordaten und/oder Straßenbedingungen, wie Nässe, Trockenheit, Eis, Schnee, und/oder ein Beschleunigungs-/Verlangsamungsmuster über den Zeitraum umfassen.

**7.** Verfahren (100) nach einem der Ansprüche 1 bis 6, das ferner einen Schritt des Bereitstellens (104) der gewünschten Sattelkupplungsposition (FWP) als Zieleingabe für ein geschlossenes Regelkreissystem (CTL) umfasst, um Sattelkupplungsstellglieder (FWA) zu betätigen, um die Sattelkupplung gemäß der gewünschten Sattelkupplungsposition (FWP) zu bewegen.

**8.** Verfahren (100) nach einem der Ansprüche 1 bis 7, wobei der Schritt des Ausführens (103) eines zweiten Reinforcement-Learning-Modells (RL2) einen Schritt des Definierens (103bis) eines Fahrzeugparameters (VP) umfasst, der durch die durch das Verfahren (100) bestimmte gewünschte Sattelkupplungsposition (FWP) optimiert werden soll.

**9.** Verfahren (100) nach Anspruch 8, wobei der Fahrzeugparameter (VP) die Aerodynamik, d. h. Kraftstoffeffizienz, und/oder die Traktion und/oder der Fahrkomfort und/oder der Reifenverschleiß der Reifen der Räder des Fahrzeugs ist.

**10.** Verfahren (100) nach einem der Ansprüche 8 bis 9, wobei Eingaben in das zweite Reinforcement-Learning-Modell (RL2) eine geschätzte Rückmeldung (FFV) zum Fahrzeugparameter (VP) umfassen, wobei die geschätzte Rückmeldung (FFV) zum Fahrzeugparameter (VP) angibt, ob der Fahrzeugparameter (VP) durch eine vorherige Ausgabe des zweiten Reinforcement-Learning-Modells (RL2) verbessert wurde, wobei die geschätzte Rückmeldung (FFV) zum Fahrzeugparameter (VP) durch ein Fahrzeugparameter-Rückmeldungsschätzungs(VFE)-Modul basierend auf Fahrzeuginformationen, die von einer Untergruppe der Fahrzeugsensoren erfasst werden, die am Fahrzeug angebracht sind, um die Eingabemerkmale (IF) zu erfassen, geschätzt wird.

11. Verfahren nach Anspruch 1, das ferner das Anzeigen einer Benachrichtigung zum manuellen Ändern der Sattelkupplungsposition des Fahrzeugs basierend auf der Sattelkupplungsposition (FWP) umfasst.

12. Computerprogrammvorrichtung, die einen Satz von Anweisungen umfasst, der dazu konfiguriert ist, das Verfahren nach einem der Ansprüche 1 bis 11 zu implementieren, wenn der Satz von Anweisungen auf einem Prozessor ausgeführt wird.

13. Fahrzeug, das eine Sattelkupplung und einen Prozessor und einen zugeordneten Speicher umfasst, der ein Computerprogramm nach Anspruch 12 umfasst, wobei der Prozessor dazu konfiguriert ist, das Computerprogramm auszuführen.

**Revendications**

1. Procédé (100) de détermination d'une position d'une sellette d'attelage sur un véhicule, le procédé comprenant les étapes suivantes :

- de réception (101), au niveau d'un processeur à bord du véhicule, de caractéristiques d'entrée associées au mouvement continu du véhicule pendant une période de temps ;
- d'exécution (102), via le processeur, d'un premier modèle d'apprentissage par renforcement (RL1), où les entrées au premier modèle d'apprentissage par renforcement (RL1) comprennent les caractéristiques d'entrée (IF) et au moins un retour du conducteur (FFD), l'au moins un retour du conducteur (FFD) indiquant si une sortie précédente du premier modèle d'apprentissage par renforcement (RL1) était correcte, les sorties du premier modèle d'apprentissage par renforcement (RL1) comprenant un cycle de conduite (DC) actuel du véhicule ; et une application de conduite (DA) actuelle du véhicule,
- d'exécution (103), via le processeur, d'un second modèle d'apprentissage par renforcement (RL2), où les entrées au second modèle d'apprentissage par renforcement (RL2) comprennent les sorties du premier modèle d'apprentissage par renforcement (RL1) et les caractéristiques d'entrée (IF), la sortie du second modèle d'apprentissage par renforcement (RL2) comprenant une position de sellette d'attelage (FWP) souhaitée.

2. Procédé (100) selon la revendication 1, dans lequel les caractéristiques d'entrée (IF) sont collectées par des capteurs de véhicule placés sur le véhicule et comprennent au moins l'une des informations sur le conducteur de véhicule (VDI), des informations sur l'état de véhicule (VSI) et des informations sur l'environnement (EI).

3. Procédé (100) selon la revendication 2, dans lequel les informations sur le conducteur de véhicule (VDI) comprennent au moins l'une des informations sur l'accélérateur, des informations sur la pédale de frein et des informations sur l'angle de braquage.

4. Procédé (100) selon la revendication 2, dans lequel les informations sur l'état de véhicule (VSI) comprennent au moins l'un parmi la vitesse de véhicule, les vitesses des roues, la charge par essieu, la position GPS du véhicule, les données d'articulation de suspension, le carburant consommé par le véhicule, l'accélération et les moments sur le centre de gravité du véhicule, et une usure de pneus d'au moins une roue du véhicule, un couple appliqué à au moins une roue du véhicule.

5. Procédé (100) selon la revendication 2, dans lequel les informations sur l'environnement (EI) comprennent au moins l'un parmi l'angle de pente, l'angle d'inclinaison, la vitesse du vent, la direction du vent.

6. Procédé (100) selon l'une quelconque des revendications 2 à 5, dans lequel les caractéristiques d'entrée comprennent en outre au moins l'un parmi les données de glissement pour les roues du véhicule, une capacité de freinage, un angle de route de montée/descente pour la route sur laquelle le véhicule se déplace, les données générales du moteur, l'état des routes tel que mouillé, sec, verglacé, enneigé, un schéma d'accélération/décélération sur la période de temps.

7. Procédé (100) selon l'une quelconque des revendications 1 à 6, comprenant en outre une étape de fourniture (104) de la position de sellette d'attelage (FWP) souhaitée comme entrée cible pour un système de commande en boucle fermée (CTL) pour actionner des actionneurs de sellette d'attelage (FWA) pour déplacer la sellette d'attelage selon la position de sellette d'attelage (FWP) souhaitée.

8. Procédé (100) selon l'une quelconque des revendications 1 à 7, dans lequel l'étape d'exécution (103) d'un second modèle d'apprentissage par renforcement (RL2) comprend une étape de définition (103bis) d'un paramètre de véhicule (VP) à optimiser par la position de sellette d'attelage (FWP) souhaitée déterminée par le procédé (100).

9. Procédé (100) selon la revendication 8, dans lequel le paramètre de véhicule (VP) est au moins l'un parmi l'aérodynamique, c'est-à-dire le rendement du carburant, la traction, le confort de roulement, l'usure de pneus des pneus des roues, du véhicule.

10. Procédé (100) selon l'une quelconque des revendications 8 et 9, dans lequel les entrées au second modèle d'apprentissage par renforcement (RL2) comprennent un retour estimé (FFV) sur le paramètre de véhicule (VP), le retour estimé (FFV) sur le paramètre de véhicule (VP) indiquant si le paramètre de véhicule (VP) a été amélioré par une sortie précédente du second modèle d'apprentissage par renforcement (RL2), le retour estimé (FFV) sur le paramètre de véhicule (VP) étant estimé par un module d'estimation de retour de paramètre de véhicule (VFE) sur la base d'informations de véhicule collectées par un sous-ensemble de capteurs de véhicule placés sur le véhicule pour collecter les caractéristiques d'entrée (IF).

11. Procédé selon la revendication 1, comprenant en outre l'affichage d'une notification pour modifier manuellement la position de sellette d'attelage du véhicule sur la base de la position de sellette d'attelage (FWP).

12. Appareil de programme informatique, comprenant un ensemble d'instructions configuré pour mettre en oeuvre le procédé selon l'une quelconque des revendications 1 à 11, lorsque l'ensemble d'instructions est exécuté sur un processeur.

13. Véhicule comprenant une sellette d'attelage et un processeur et une mémoire associée comprenant un programme informatique selon la revendication 12, le processeur étant configuré pour exécuter le programme informatique.

**Fig. 1A**

**Fig. 1B**

**Fig. 2A**

**Fig. 2B**

**Fig. 3**

```
          ┌─────────────────────────┐
          │           101           │
          └─────────────────────────┘
                       │
                       ▼
          ┌─────────────────────────┐                100
          │           102           │                 ╲
          └─────────────────────────┘                  ╲
                       │
                       ▼
          ┌─────────────────────────┐
          │       103, 103bis       │
          └─────────────────────────┘
                       │
                       ▼
          ┌─────────────────────────┐
          │           104           │
          └─────────────────────────┘
```

# Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102018004110 A1